# EUROPÄISCHE PATENTSCHRIFT

(11) **EP 2 905 586 B1**
(45) Veröffentlichungstag und Bekanntmachung des Hinweises auf die Patenterteilung: **04.03.2020**
(21) Anmeldenummer: 15152672.0
(22) Anmeldetag: 27.01.2015
(51) Int. Cl.: G01F 25/00, F02D 33/00, F02M 37/00

(54) **Verfahren zur Funktionsprüfung einer Anordnung zur dynamischen Kraftstoffverbrauchsmessung**
Method for testing the functionality of an assembly for dynamic measuring of fuel consumption
Procédé de contrôle de fonctionnement d'un agencement destiné à mesurer dynamiquement la consommation de carburant

(30) Priorität: 06.02.2014 AT 500912014
(43) Veröffentlichungstag der Anmeldung: 12.08.2015
(73) Patentinhaber: AVL List GmbH, 8020 Graz (AT)
(72) Erfinder: Tauch, Michael, 8020 Graz (AT); Christian, Rudolf, 8047 Graz (AT)
(74) Vertreter: Patentanwälte Pinter & Weiss OG

(56) Entgegenhaltungen:
- AT-A2- 512 724
- DE-A1-102011 100 029
- US-A1- 2005 257 595

## Beschreibung

Die Erfindung betrifft ein Verfahren zur Funktionsprüfung einer Anordnung zur dynamischen Kraftstoffverbrauchsmessung, wobei an einem zur eigentlichen Messung des dynamischen Kraftstoffverbrauchs vorgesehenen Durchflusssensor Referenz-Messwerte bei bestimmten Referenzdurchflüssen aufgenommen um mit den dabei zu erwartenden Messwerten verglichen werden.

Insbesondere für Forschung und Entwicklung an Brennkraftmaschinen ist es wichtig, den Kraftstoffverbrauch - das ist die tatsächlich in den Brennraum der Brennkraftmaschine eingebrachte Kraftstoffmasse pro Zeiteinheit - zeitaktuell und genau zu messen. Die Versorgung der Brennkraftmaschine am Prüfstand oder in der jeweiligen Anwendung mit flüssigem Kraftstoff, beispielsweise Benzin oder Diesel, erfolgt gewöhnlich aus einem Tank aus dem der Kraftstoff durch Schwerkraft oder mit Hilfe einer Kraftstoffpumpe einem Verbrauchsensor zur Messung des Kraftstoff-Zulaufs und weiters einer Konditioniereinheit zugeführt wird, in der einerseits ein erforderlicher Kraftstoff-Über-oder-Unterdruck mit Hilfe einer Pumpe und gegebenenfalls mittels Druckreglern und andererseits und vor allem eine definierte Kraftstofftemperatur mit einem Wärmetauscher eingestellt wird. Die wesentlichste Komponente ist dabei naturgemäß der zur eigentlichen Messung des dynamischen Kraftstoffverbrauchs vorgesehene Durchflusssensor, dessen korrekte Funktion deshalb zumindest von Zeit zu Zeit geprüft werden muss. Dazu wird üblicherweise ein Referenzdurchfluss bereitgestellt, dessen Durchflussrate bekannt und/oder regelbar ist und mit dem dabei tatsächlich gemessenen Messwert verglichen werden kann.

Die beschriebenen Bereitstellung eines Referenzdurchflusses ermöglicht zwar in vorteilhafter Weise auch eine absolute Kalibrierung des Durchflusssensors, erfordert aber umfangreiche und entsprechend aufwendige Vorkehrungen und zusätzliche Verfahrensschritte, die für eine schnelle Funktionsprüfung der Gesamtanordnung nicht geeignet bzw. hinderlich sind.

Die DE 10 2011 100 029 A1 offenbart ein Verfahren zum Überprüfen eines Kalibrierzustands einer Vorrichtung zum Messen eines Kraftstoffflusses, wobei an einem zur eigentlichen Messung des dynamischen Kraftstoffverbrauchs vorgesehenem Durchflusssensor ein Referenz-Messwert bei einem bestimmten Referenzdurchfluss aufgenommen und mit den dabei zu erwartenden Messwerten verglichen wird.

Die US 2005/0257595 A1 offenbart Vorrichtungen und Verfahren zur Kalibrierung eines Mikrofluid-Sensors für analytische Anwendungen wie etwa Chromatographie mit Mikro-/ Nanodurchfluss.

Aufgabe der vorliegenden Erfindung ist es daher, ein Verfahren eingangs genannter Art so zu verbessern, dass eine schnelle Funktionsprüfung beispielsweise auch bei jeder Inbetriebnahme der Anordnung zur Kraftstoffverbrauchsmessung durchgeführt werden kann, ohne dass für eine absolute Kalibrierung des Durchflusssensors eher nur in größeren Zeitabständen gerechtfertigte umfangreiche Vorkehrungen bzw. zusätzliche Um- und Anbauten an der Anordnung erforderlich werden.

Diese Aufgabe wird gemäß der vorliegenden Erfindung dadurch gelöst, dass zumindest zwei Referenzdurchflüsse durch aufeinanderfolgenden Betrieb einer für den geregelten Kraftstoffdurchlauf in der Anordnung ohnedies vorgesehenen Systempumpe bei unterschiedlichen Frequenzen erzeugt werden, und dass der aus den dabei festgestellten unterschiedlichen Referenz-Messwerten ermittelte Gradient mit dem bekannten Gradienten der charakteristischen Kurve der Systempumpe verglichen wird. Es ist damit überhaupt kein zusätzlicher apparativer Aufwand und kein Umbau an der Anordnung zur Kraftstoffverbrauchsmessung notwendig - die charakteristische Kurve der Systempumpe bzw. der die Abhängigkeit des Durchflusses von der Frequenz bzw. Drehzahl der Pumpe definierende Gradient der charakteristischen Kurve der Systempumpe ist zumeist aus Datenblättern der Hersteller bekannt bzw. kann auf einfache Weise vorab in einer entsprechenden Messreihe bestimmt werden. Nachdem der Gradient der charakteristischen Kurve der Systempumpe weder vom Systemdruck noch vom geförderten Medium abhängt kann die Differenz zwischen den beiden Referenz-Messwerten unmittelbar mit dem bekannten Gradienten der charakteristischen Kurve der Systempumpe verglichen werden ohne dass irgendwelche Betriebsbedingungen (Druck, Medium,...) für diese einfache Funktionsprüfung des Durchflusssensors berücksichtigt werden müssten. Zweckmäßigerweise wird bei der Bestimmung der Referenz-Messwerte die gesamte Fördermenge der Systempumpe über den Durchflusssensor umgeleitet, während im Normalbetrieb (bei der dynamischen Kraftstoffverbrauchsmessung) nur der Verbrauch des Prüflings über den Durchflusssensor fließt. Diese Umleitung kann entweder automatisch oder aber auch manuell, beispielsweise über ein Drei/Zwei-Wegeventil, durchgeführt werden, was den zusätzlichen Aufwand nur unwesentlich erhöht.

In weiters bevorzugter Ausgestaltung des erfindungsgemäßen Verfahrens können über einen ausgangsseitig der Anordnung für die Kontrolle und Aufrechthaltung des Systemdruckes ohnedies vorgesehenen Drucksensor zusätzlich mehrere, vorzugsweise drei, Drücke bei mehreren, vorzugsweise drei, unterschiedlichen Pumpenfrequenzen / Referenzdurchflüssen aufgenommen und mit den für diese Pumpenfrequenzen / Referenzdurchflüsse zu erwartenden Druckwerten verglichen werden. Damit kann mit dem erfindungsgemäßen Verfahren nicht nur die Funktion des Durchflusssensors überprüft sondern auch die Funktion der Systempumpe getestet werden. Die Systempumpe liefert bei korrekter Funktion ausgangsseitig einen definierten Druck für eine definierte Pumpenfrequenz bzw. den zugehörigen Referenzdurchfluss. Wenn nun wie beschrieben der vorhandene, für die Kontrolle und Aufrechthaltung des Systemdruckes vorgesehene Drucksensor dazu verwendet wird, den Ausgangsdruck für mehrere, beispielsweise drei verschiedene Pumpenfrequenzen zu messen kann aus der Standardabweichung der drei zugehörigen gemessenen Drücke einfach auf die korrekte Funktion der Pumpe geschlossen werden.

In weiters bevorzugter Ausgestaltung der Erfindung ist vorgesehen, dass über einen ausgangsseitig einer vorranging zur Temperaturkonditionierung vorgesehenen Konditionierungseinheit angeordneten Temperatursensor mehrere, vorzugsweise drei, Temperaturen bei mehreren, vorzugsweise drei, unterschiedlichen Pumpenfrequenzen / Referenzdurchflüssen aufgenommen werden, deren Abweichung von einem Mittelwert als Aussage über die korrekte Funktion der Konditionierungseinheit verwendet wird. Die Konditionierungseinheit ist wie beschrieben unter anderem verantwortlich für eine konstante Temperatur im Kraftstoff die Voraussetzung für gültige Messresultate ist. Auf beschriebene Weise kann sehr einfach die Temperaturstabilität für drei verschiedene Durchflussraten (Pumpenfrequenzen) bestimmt werden. Dazu wird normalerweise die Temperatur nach einer bestimmten Wartezeit nach der Einstellung einer bestimmten Pumpenfrequenz gemessen - die Maximalabweichung der Temperatur von einem Mittelwert muss dann innerhalb eines bestimmten Bereiches liegen - wenn dies für alle drei Referenzdurchflüsse (Pumpenfrequenzen) der Fall ist kann davon ausgegangen werden dass die Temperaturkonditionierung korrekt funktioniert.

Die Druck- und Temperaturmessungen für die Überprüfung der Pumpenfunktion und der Funktion der Temperaturkonditionierung können der Einfachheit halber bei den gleichen Pumpenfrequenzen / Referenzdurchflüssen vorgenommen werden, was aber nicht zwingend notwendig ist.

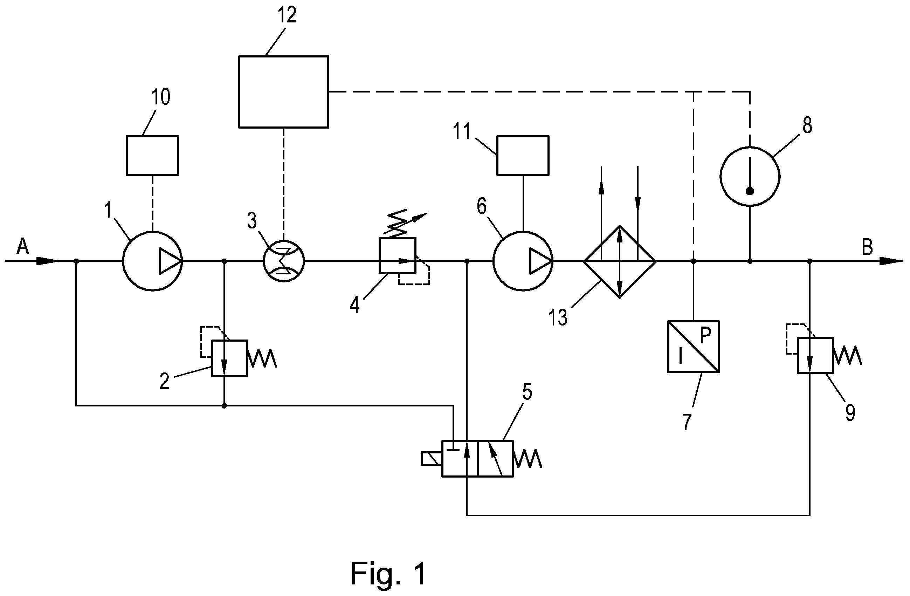

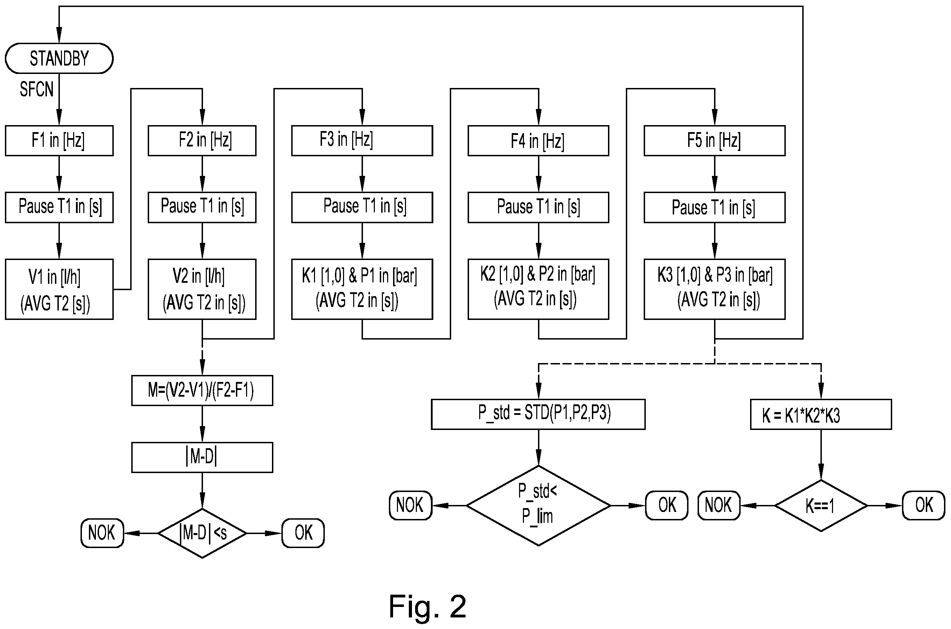

Die Erfindung wird im Folgenden noch anhand der Zeichnungen näher erläutert. Fig. 1 zeigt dabei in schematischer Darstellung eine beispielhafte Anordnung zur dynamischen Kraftstoffverbrauchsmessung und Fig. 2 ein Ablaufdiagramm zur Durchführung des erfindungsgemäßen Verfahrens an einer Anordnung nach Fig. 1.

Normale Funktion der Anordnung nach Fig. 1:
Über den Kraftstoffeinlass A gelangt Kraftstoff von der Haustechnik in das Kraftstoffmesssystem und dann über den Anschluss B zu einer hier nicht dargestellten Brennkraftmaschine. Die Vorkreispumpe 1 dreht sich mit der Frequenz die im Frequenzumrichter 10 eingestellt ist und erzeugt so den am Druckregler 2 eingestellten Vordruck der für die Funktion des Durchflusssensors 3 erforderlich ist. Der Druckregler 4 stellt den sogenannten Rücklaufdruck ein, falls das Messsystem an einer Brennkraftmaschine mit Rücklauf benutzt wird (nicht dargestellt). Die Systempumpe 6 (hier Messkreispumpe) dreht sich mit der am Frequenzumrichter 11 eingestellten Frequenz und erzeugt so einen am Bypassdruckregler 9 eingestellten Druck, der am Drucksensor 7 gemessen werden kann. Üblicherweise wird eine Konditioniereinheit 13 verwendet um den Kraftstoff auf eine voreingestellte Temperatur zu konditionieren. Die Auslasstemperatur kann am Temperatursensor 8 gemessen werden.

Im Instrument Controller 12 werden die Messwerte gesammelt und beim Funktionscheck weiterverrechnet. Das Spülventil 5 dient normalerweise dazu eine Verbindung zwischen Vorkreis und Messkreis zu schaffen und Luftblasen, mittels eines Gasblasenabscheiders, aus dem System zu entfernen (ist aus Vereinfachungsgründen nicht dargestellt) Im Normalbetrieb ist das Ventil so geschaltet wie in der Zeichnung dargestellt.

Funktion der Anordnung nach Fig. 1 im Funktionscheck mit Bezugnahme auf Figur 2:
Im Zustand STANDBY (laufen beide Pumpen 1 und 6, der Durchflusssensor 3 ist messbereit und die Konditioniereinheit 13 hat eine bestimmte Temperatur (gemessen am Temperatursensor 8) eingeregelt. Durch einen Befehl (in unserem Fall SFCN) wird der Funktionstest gestartet.

Die Messkreispumpe (Systempumpe 6) fährt nun auf die vom Frequenzumrichter 11 vorgegebene Frequenz F1. Danach wird das Spülventil 5 geöffnet, das heißt, die von der Systempumpe 6 geförderte Umlaufmenge läuft jetzt nicht mehr im Kreis sondern wird über die Vorkreispumpe 1 nachgefördert und ist also am Durchflusssensor 3 messbar. Als nächstes wird T1 Sekunden gewartet um dem System Zeit zur Stabilisierung zu geben. Danach wird am Durchflusssensor 3 der Durchfluss V1 in l/h gemessen und über T2 Sekunden gemittelt. Danach fährt die Systempumpe 6 auf die vom Frequenzumrichter 11 vorgegebene Frequenz F2. Wieder eine Pause von T1 Sekunden. Der Zweite Durchflusswert V2 wird mit dem Durchflusssensor 3 in l/h gemessen und über T2 Sekunden gemittelt. Danach wird das Entlüftungsventil 5 wieder geschlossen (Normalbetrieb).

Aus den beiden Durchflusswerten V1 und V2 wird nun die Steigung M wie in Figur 2 angegeben berechnet. Diese Steigung wird mit dem Referenzwert D der Systempumpe 6 verglichen. Sofern der Betragsmäßige Unterschied kleiner als eine definierbare Schwelle S ist, gilt der Sensortest als bestanden.

Danach fährt die Systempumpe die Frequenz F3 an, Pause für T1 .... Dann wird für T2 Sekunden zum einen der Druck P1 am Drucksensor 7 gemessen und gemittelt, zum anderen wird die Temperaturstabilität K1 am Ende der T2 Sekunden ermittelt. Es gibt verschiedene Möglichkeiten die Temperaturstabilität zu ermitteln. In unserem Fall wird die ein gleitendes Fenster verwendet, innerhalb dessen die maximale Abweichung der Temperatur vom Mittelwert über das gesamte Fenster berechnet wird. Standardwerte wären hier: Wenn die maximale Temperaturabweichung innerhalb der letzen 10 Sekunden vom Mittelwert der letzen 10 Sekunden weniger als 0.1°C beträgt gilt die Temperaturreglung als stabil beziehungsweise eingeregelt. Die Überprüfung der Temperaturstabilität wird vom Instrument Controller 12 auf Basis der Auslasstemperatur am Temperatursensor 8 ständig ermittelt.

Diese Prozedur wiederholt sich noch zweimal für K2 bzw. P2 und K3 bzw. P3. Anschließend erfolgt die Auswertung der Messungen am Instrument Controller 12.

Sind alle drei Temperaturstabilitätswerte K1,K2 und K3 =1, so gilt die Temperaturregelung als funktionstüchtig. Ist die Standardabweichung der gemittelten Drücke P1,P2 und P3 kleiner als ein parametrierbarer Grenzwert P_lim, so gilt die Druckregelung als funktionstüchtig.

Abgesehen von der Verwendung der Messkreispumpe (6) könnte natürlich auch eine anderen im System ohnedies vorgesehene Pumpe, wie hier beispielsweise die Vorkreispumpe 1, in beschriebener Weise für die erfindungsgemäße Funktionsprüfung eingesetzt werden, was lediglich andere Umschaltmöglichkeiten in der Anordnung nach Fig. 1 erfordert.

## Patentansprüche

1. Verfahren zur Funktionsprüfung einer Anordnung zur dynamischen Kraftstoffverbrauchsmessung, wobei an einem zur eigentlichen Messung des dynamischen Kraftstoffverbrauchs vorgesehenen Durchflusssensor (3) Referenz-Messwerte bei bestimmten Referenzdurchflüssen aufgenommen und mit den dabei zu erwartenden Messwerten verglichen werden, **dadurch gekennzeichnet, dass** zumindest zwei Referenzdurchflüsse durch aufeinanderfolgenden Betrieb einer für den geregelten Kraftstoffdurchlauf in der Anordnung ohnedies vorgesehenen Systempumpe (6) bei unterschiedlichen Frequenzen erzeugt werden, wobei die gesamte Fördermenge der Systempumpe (6) über den Durchflusssensor (3) umgeleitet wird und dass der aus den dabei festgestellten unterschiedlichen Referenz- Messwerten ermittelte Gradient mit dem bekannten Gradienten der charakteristischen Kurve der Systempumpe (6) verglichen wird.

2. Verfahren nach Anspruch 1, **dadurch gekennzeichnet, dass** über einen ausgangsseitig der Anordnung für die Kontrolle und Aufrechthaltung des Systemdruckes ohnedies vorgesehenen Drucksensor (7) zusätzlich mehrere, vorzugsweise drei, Drücke bei mehreren, vorzugsweise drei, unterschiedlichen Pumpenfrequenzen / Referenzdurchflüssen aufgenommen und mit den für diese Pumpenfrequenzen / Referenzdurchflüsse zu erwartenden Druckwerten verglichen werden.

3. Verfahren nach Anspruch 1 oder 2, **dadurch gekennzeichnet, dass** über einen ausgangsseitig einer vorrangig zur Temperaturkonditionierung vorgesehenen Konditionierungseinheit 13 angeordneten Temperatursensor (8) mehrere, vorzugsweise drei, Temperaturen bei mehreren, vorzugsweise drei, unterschiedlichen Pumpenfrequenzen / Referenzdurchflüssen aufgenommen werden, deren Abweichung von einem Mittelwert als Aussage über die korrekte Funktion der Konditionierungseinheit 13 verwendet wird.

4. Verfahren nach Anspruch 2 und 3, **dadurch gekennzeichnet, dass** die Druck- und Temperaturmessungen bei den gleichen Pumpenfrequenzen / Referenzdurchflüssen vorgenommen werden.

## Claims

1. Method for the functional testing of an arrangement for dynamic fuel consumption measurement, wherein reference measured values are recorded at certain reference flows at a flow sensor (3) provided for the actual measurement of the dynamic fuel consumption and compared with the measured values to be expected, **characterized in that** at least two reference flows are produced through successive operation, at different frequencies, of a system pump (6) provided in any case for the regulated fuel flow in the arrangement, the entire conveyed quantity of the system pump (6) being diverted over the flow sensor (3), and that the gradient determined from the different reference measured values obtained is compared with the known gradients of the characteristic curve of the system pump (6).

2. Method as set forth in claim 1, **characterized in that** via a pressure sensor (7) provided in any case on the outlet side of the arrangement for checking and maintaining the system pressure, several, preferably three, pressures can additionally be recorded at several, preferably three, pump frequencies / reference flows and compared to the pressure values to be expected for these pump frequencies / reference flows.

3. Method as set forth in claim 1 or 2, **characterized in that** several, preferably three, temperatures are measured via a temperature sensor (8) arranged in the conditioning unit (13) on the outlet side predominantly for temperature conditioning at several, preferably three, different pump frequencies / reference flows whose deviation from a mean value is used as information about the correct functioning of the conditioning unit (13).

4. Method as set forth in claims 2 and 3, **characterized in that** the pressure and temperature measurements are performed at the same pump frequencies / reference flows.

## Revendications

1. Procédé de vérification du fonctionnement d'un dispositif destiné à mesurer dynamiquement la consommation de carburant, dans lequel des valeurs de mesure de référence sont enregistrées à des débits de référence spécifiques au niveau d'un capteur de débit (3) prévu pour réellement mesurer dynamiquement la consommation de carburant et lesdites valeurs de mesure de référence sont comparées aux valeurs de mesure à attendre pendant le processus, **caractérisé en ce qu'**au moins deux débits de référence sont générés à des fréquences différentes par activation séquentielle d'une pompe de système (6) déjà prévue dans le dispositif pour le passage réglé du carburant, la capacité totale de la pompe de système (6) étant déviée par l'intermédiaire du capteur de débit (3), et **en ce que** le gradient déterminé à partir des différentes valeurs de mesure de référence définies pendant le processus est comparé au gradient connu de la courbe caractéristique de la pompe de système (6).

2. Procédé selon la revendication 1, **caractérisé en ce qu'**un capteur de pression (7) déjà prévu du côté de la sortie du dispositif pour le contrôle et le maintien de la pression de système, permet d'enregistrer en outre plusieurs, de préférence trois pressions pour plusieurs, de préférence pour trois fréquences de pompe/débits de référence différents et de les comparer aux valeurs de pression à attendre pour ces fréquences de pompe/débits de référence.

3. Procédé selon la revendication 1 ou 2, **caractérisé en ce qu'**un capteur de température (8) disposé du côté de la sortie d'une unité de conditionnement (13) prévue principalement pour le conditionnement de la température permet d'enregistrer plusieurs, de préférence trois températures, pour plusieurs, de préférence trois différentes fréquences de pompe/débits de référence dont l'écart par rapport à une valeur moyenne est utilisé comme indication du bon fonctionnement de l'unité de conditionnement (13).

4. Procédé selon les revendications 2 et 3, **caractérisé en ce que** les mesures de pression et de température sont effectuées aux mêmes fréquences de pompe/débits de référence.
